# EUROPEAN PATENT APPLICATION

(11) **EP 2 117 210 A1**
(43) Date of publication of application: **11.11.2009**
(21) Application number: 08706426.7
(22) Date of filing: 30.01.2008
(51) Int. Cl.: H04M 3/42

(54) **COMMUNICATION METHOD AND COMMUNICATION SYSTEM**

(30) Priority: 02.02.2007 CN 200710006537
(71) Applicant: Zhou, Yang, Chaoyang District Beijing 100022 (CN)
(72) Inventor: LI, Qiang, Beijing 100022 (CN)
(74) Representative: Eisenführ, Speiser & Partner
(86) International application number: PCT/CN2008/000231
(87) International publication number: WO 2008/095406

(57) **Abstract**

The present invention discloses a communication method for providing communication data to a first communication terminal in a communication system. Said communication data are chromatic image data representing personalized information of a user of a second communication terminal in said communication system. Said chromatic image data are pre-stored on a chromatic image data provision platform. The method comprises the steps of: sending, by said first communication terminal, a request for acquisition of said chromatic image data to said chromatic image data provision platform; and receiving, by said first communication terminal, from said chromatic image data provision platform said chromatic image data as a response to said request.

## Description

### FIELD OF THE INVENTION

The present invention generally relates to the field of communication technology, and in particular, to a communication method and a communication system implementing the communication method.

### BACKGROUND OF THE INVENTION

With the development of communication technology and network technology, a communication terminal, such as a cellular telephone, a personal digital assistant (PDA), a fixed telephone, a portable computer having a software terminal and the like, has become more and more popular. Users can implement voice call services via a communication network by means of these communication terminals. However, currently the users are no more satisfied with being provided with ordinary voice communication services. Instead, they hope to enjoy more chromatic image services via a communication network.

The technology of providing users with color ring back tone (CRBT) services while providing ordinary voice communication services has been proposed, wherein a CRNT platform provides a calling party with CRBT when the calling party originates a call setup to a called party. However, the prior art can only provide users with simple CRBT, which is far from satisfactory in terms of users' demands. Additionally, in the prior art there is no technology that is capable of providing users of the communication terminals with chromatic image data services while implementing a voice call, wherein chromatic image data are combined data formed by, for example, text data, picture data, audio data, video data and so on. Moreover, in the prior art there is no communication terminal on which chromatic image data can be presented.

### SUMMARY OF INVENTION

It is an object of the present invention to provide a communication method for providing communication data to a communication terminal in a communication system, so that chromatic image data can be provided to a user of this communication terminal.

According to an aspect of the present invention, there is provided a communication method for providing communication data to a first communication terminal in a communication system, wherein said communication data are chromatic image data representing personalized information of a user of a second communication terminal in said communication system. Said chromatic image data are pre-stored on a chromatic image data provision platform. The method comprises the steps of: sending, by said first communication terminal, a request for acquisition of said chromatic image data to said chromatic image data provision platform; and receiving, by said first communication terminal, from said chromatic image data provision platform said chromatic image data as a response to said request.

According to an embodiment of the present invention, the method further comprises the step of presenting said chromatic image data on said first communication terminal.

According to an embodiment of the present invention, the method further comprises the step of: prior to said sending step, detecting whether a call event occurs on said first communication terminal, wherein said sending step is performed when the occurrence of a call event is detected. Preferably, said call event is one of an incoming call event, an outgoing call event, a putting through event, a hangup event, a ready for an outgoing call event, and a user query event.

According to an embodiment of the present invention, said request at least comprises an address information of said first communication terminal and an address information of said second communication terminal. Preferably, said address information is a unique identification code assigned to said first or second communication terminal.

According to an embodiment of the present invention, the method further comprises the step of: after said receiving step, saving the received chromatic image data in said first communication terminal.

According to an embodiment of the present invention, the method further comprises the step of presenting the previously saved chromatic image data on said first communication terminal when said chromatic image data cannot be received from said chromatic image data provision platform.

According to an embodiment of the present invention, the method further comprises the step of updating previously saved chromatic image data using the received chromatic image data when said received chromatic image data are not consistent with the chromatic image data previously saved in said first communication terminal.

According to an embodiment of the present invention, said sending step and said receiving step are performed via a first communication channel which is a packet switched channel. Preferably, said packet switched channel is one of a wired and a wireless packet channel.

According to an embodiment of the present invention, said sending step and said receiving step are performed via a first communication channel which is a circuit switched channel.

According to an embodiment of the present invention, said first communication terminal is an originating device and said second communication terminal is a terminating device, wherein said sending step is performed when said first communication terminal originates a call setup request to said second communication terminal via a second communication channel.

According to an embodiment of the present invention, said second channel is one of a circuit switched channel and a packet switched channel.

According to an embodiment of the present invention, said second channel is the same channel as said first channel.

According to an embodiment of the present invention, said first communication terminal is a terminating device and said second communication terminal is an originating device, wherein said sending step is performed when said first communication terminal receives a call setup request from said second communication terminal via the second communication channel.

According to an embodiment of the present invention, said second channel is one of a circuit switched channel and a packet switched channel.

According to an embodiment of the present invention, said second channel is the same channel as said first channel.

According to an embodiment of the present invention, said second channel is a different channel from said first channel.

According to an embodiment of the present invention, said chromatic image data are different depending on different call states.

According to an embodiment of the present invention, said chromatic image data are different depending on different periods of time.

According to an embodiment of the present invention, said chromatic image data are different depending on different communication terminals.

According to an embodiment of the present invention, said chromatic image data comprise one of or the combination of text data, picture data, audio data, flash data, video data, link address link, and multimedia data.

According to an embodiment of the present invention, said personalized information comprises identity information of a user of the second communication terminal.

According to an embodiment of the present invention, said identity information comprises one or more of name, gender, telephone number, home address, company name, title, zip code, MSN address, email address, and personal signature.

According to another aspect of the present invention, there is provided a communication method for providing communication data to a first communication terminal in a communication system, wherein said communication data are chromatic image data representing personalized information of a user of a second communication terminal in said communication system, said chromatic image data being pre-stored in a chromatic image data provision platform. The method comprises the steps of: receiving a request for acquisition of said chromatic image data from said first communication terminal; retrieving said chromatic image data in said chromatic image data provision platform based on a parameter in said request; and sending the retrieved chromatic image data to said first communication terminal.

According to an embodiment of the present invention, said parameter at least comprises an address information of said first communication terminal and an address information of said second communication terminal.

According to an embodiment of the present invention, said address information is a unique identification code assigned to the communication terminal.

According to another aspect of the present invention, there is provided a communication system for providing communication data to a first communication terminal in the communication system, wherein said communication data are chromatic image data representing personalized information of a user of a second communication terminal in said communication system, the system comprising: the first communication terminal; the second communication terminal; and a chromatic image data provision platform in which said chromatic image data are stored. Said first communication terminal sends a request for acquisition of said chromatic image data to said chromatic image server and receives from said chromatic image data provision platform said chromatic image data as a response to said request.

According to another aspect of the present invention, there is provided a data provision platform for providing communication data to a communication terminal in a communication system, wherein said communication data are chromatic image data representing personalized information of a user of another communication terminal in said communication system, said data provision platform comprising: a chromatic image database for storing said chromatic image data; chromatic image data request receiving means for receiving a request for acquisition of said chromatic image data from said communication terminal; chromatic image data retrieving means for retrieving from said chromatic image database said chromatic image data to be provided to said communication terminal based on a parameter in said request for acquisition of said chromatic image data; chromatic image data sending means for providing the retrieved chromatic image data to said communication terminal; and chromatic image data setting means for setting said chromatic image data; wherein said parameters are the address information of said communication terminal and the address information of said another communication terminal.

According to an embodiment of the present invention, said chromatic image data comprises the combination of at least two of text data, picture data, audio data, flash data, video data, link address link, and multimedia data.

According to an embodiment of the present invention, a registered user accesses said data provision platform using one of the communication terminal, the wireless application protocol, the World Wide Web and the interactive voice response, so as to set said chromatic image data through said chromatic image data setting means.

According to an embodiment of the present invention, said chromatic image data are set to be different depending on a call state of said another communication terminal, and said call state is one of an idle state, power-off state, out-of-service state, on-the-phone state which said another communication terminal is in.

According to an embodiment of the present invention, said chromatic image data are set to be different depending on a period of time.

According to an embodiment of the present invention, a registered user sets, through said chromatic image data setting means, one of the following personal state information which he/she wants to present to the other party currently: normal, in a meeting, busy, inconvenient, and away.

According to an embodiment of the present invention, a registered user provides different chromatic image data according to different numbers of a called party through said chromatic image data setting means.

According to an embodiment of the present invention, a registered user groups numbers of communication terminals through the chromatic image data setting means and provides different chromatic image data for different number groups.

According to an embodiment of the present invention, a registered user provides different chromatic image data according to locations of a called party through said chromatic image data setting means.

According to another aspect of the present invention, there is provided a communication terminal for presenting chromatic image data, wherein said communication data are chromatic image data representing personal information of a user of another communication terminal, the communication terminal comprising: call event monitoring means for monitoring the occurrence of a call event; chromatic image data communication means for, when said call event occurs, communicating with a chromatic image data provision platform in a communication network so as to acquire, based on a parameter related to said call event from said chromatic image data provision platform, chromatic image data to be presented on said communication terminal; and chromatic image data presenting means for presenting said chromatic image data.

According to an embodiment of the present invention, the terminal further comprises chromatic image data storage means for storing said acquired chromatic image data.

According to an embodiment of the present invention, the terminal further comprises: comparison means for comparing chromatic image data acquired from said chromatic image data provision platform with chromatic image data stored in said chromatic image data storage means; and updating means for updating chromatic image data stored in said chromatic image data storage means using said acquired chromatic image data when chromatic image data acquired from said chromatic image data provision platform are not consistent with chromatic image data stored in said chromatic image data storage means.

According to an embodiment of the present invention, said parameter comprises unique identification code of a communication terminal related to said call event; and said call event is one of an outgoing voice call event, an incoming voice call event, an putting through event, a hangup event, a ready for an outgoing call event, and a user query event.

According to an embodiment of the present invention, said chromatic image data are different depending on different call events or different periods of time.

According to an embodiment of the present invention, said chromatic image data comprises the combination of at least two of text data, picture data, audio data, flash data, video data, link address link, and multimedia data; and wherein said personalized information comprises identity information of a user of said another communication terminal, and said identity information comprises one or more of name, gender, telephone number, home address, company name, title, zip code, MSN, email address, personal signature, and head portrait.

According to an embodiment of the present invention, said communication terminal is a communication device conforming to one of the GSM standard, CDMA standard, WCDMA standard, CDMA2000 standard, HSDPA standard and GPRS standard.

According to an embodiment of the present invention, if chromatic image data are not of the stream media type, then the chromatic image data presenting means will start to present chromatic image data and terminate the network connection at the same time after all of data are received; and if chromatic image data are of the stream media type, then the chromatic image data presenting means will, after receiving chromatic image data, immediately start to present chromatic image data, meanwhile keep the network connection and continue receiving chromatic image data.

According to an embodiment of the present invention, if chromatic image data are of the business card type, then said chromatic image data presenting means will present said chromatic image data in the form of business cards; if chromatic image data are of the URL type, then said chromatic image data presenting means will present said chromatic image data in the form of web pages; if chromatic image data are of the multimedia type, then said chromatic image data presenting means will present said chromatic image data in the form of a multimedia player; and if chromatic image data are of the Avatar type, then said chromatic image data presenting means will present said chromatic image data in the form of the avatar of the other party.

### BRIEF DESCRIPTION OF THE DRAWING

The features, advantages and other aspects of the present invention will become more apparent from the following detailed description, when taken in conjunction with the accompanying drawings wherein:
Fig. 1 schematically shows a communication system according to one embodiment of the present invention;
Fig. 2 shows a flowchart of a communication method according to one embodiment of the present invention;
Fig. 3 shows a flowchart of a communication method according to another embodiment of the present invention;
Fig. 4 shows a block diagram of the configuration of a chromatic image data provision platform according to one embodiment of the present invention;
Fig. 5 shows a schematic view of a communication terminal according to one embodiment of the present invention; and
Fig. 6 shows a flowchart of the processing performed by a communication terminal according to one embodiment of the present invention.

### DETAILED DESCRIPTION OF THE EMBODIMENTS

In the context of this specification, the principle of the present invention will be described by referring to and based on the Global System for Mobile Communication which is a circuit-switched communication network and the General Packet Radio Service GPRS system which is as a packet switched communication network, as an example. However, it should be noted that embodiments to be described in this specification are merely illustrative and not limiting. Other circuit-switched communication networks and packet switched communication networks also can be used in the present invention to implement data communication and voice communication. Voice communication and data communication can be transferred on proper circuit-switched communication networks and packet switched communication networks. Fixed and mobile circuit and packet switched networks with proper access technology can be used, such as time division multiple access (TDMA), code division multiple access (CDMA), frequency division multiple access (FDMA), orthogonal frequency division multiple access (OFDMA), time division multiplexing (TDM), frequency division multiplexing (FDD), or any combination of these technologies. The present invention is not limited to communication networks or access technologies of any particular type.

The term "chromatic image data" used in this specification, means personalized data of a user which can be presented on a communication terminal and which represents a user of another communication terminal implementing voice communication with the communication terminal. Different from the single data type in the prior art, the chromatic image data in the present invention are combined data comprising various types of multimedia data. For example, the content of said chromatic image data can be combined data of user-customized images, pictures, video clip, animation, multimedia information, etc. Specifically, the chromatic image data of the present invention can comprise one of or the combination of text data, picture data, audio data, flash data, video data, link data, and other multimedia data. The content of said text data can be text messages, annotation text, scripts, etc. Types of said picture data can include, without limitation, bitmap(BMP), joint photographic group (JPG), joint photographic experts group (JPEG), portable network graphics (PNG), graphics interchange format (GIF), SWF, etc. The content of said picture data can be, for example various kinds of cartoon pictures and chartlets. Types of said audio data can include, without limitation, musical instrument digital interface (MIDI), waveform file (WAV), SMF, MP3, etc. The content of said audio data is, for example, music. Types of said video data can include, without limitation, audio video interleaved (AVI), RM, MPEG-2, MPEG-4, H.264. Said link data can be address information such as the Internet address. Additionally, the content of said chromatic image data can further comprise user's identity information, wherein identity information comprises one or more of user's name, gender, telephone number, home address, name of the company the user works for, title, zip code, MSN address, email address, personal signature for example.

The term "communication terminal" used in this specification, is a desktop computer or a potable notebook on which a software terminal is run, a personal digital assistant (PDA), a customized telephone, a mobile telephone, a fixed telephone with multimedia functionality, etc. Said "communication terminal" conforms to one of the GSM standard, the CDMA standard, the WCDMA standard, the CDMA2000 standard, the HSDPA standard, the GPRS standard, the 3G standard, and the future next-generation communication standard. The communication terminal of the present invention is not limited to terminals consistent with any particular standard.

Architecture of a Communication System for Providing Chromatic Image Data to a Communication Terminal.

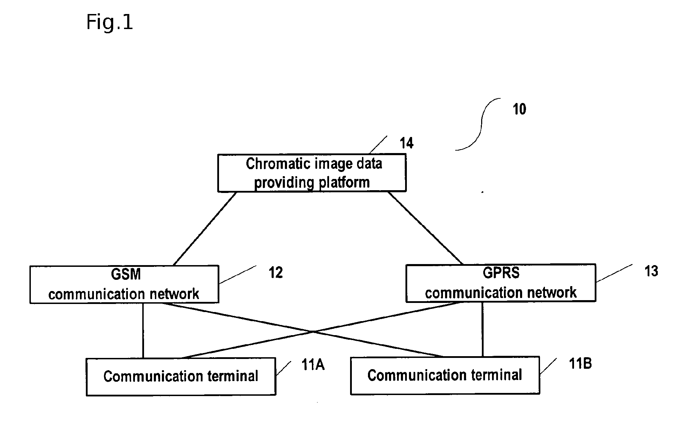

Now, referring to Fig. 1, it schematically shows a communication system 10 according to one embodiment of the present invention.

As shown in Fig. 1, the communication system 10 comprises a communication terminal 11A, a communication terminal 11 B, a GSM communication network 12, a GPRS communication network 13, and a chromatic image data provision platform 14. The communication terminal 11 A can be connected to the communication terminal 11 B via the GSM communication network 12 or the GPRS communication network 13. Additionally, the communication terminal 11A and the communication terminal 11B can be connected to the chromatic image data provision platform 14 via a gateway (not shown) through the GSM communication network 12 or the GPRS communication network 13.

Usually, the traditional voice call links are set up between the communication terminal 11A and the communication terminal 11B via the GSM communication network 12 or the GPRS communication network 13. For example, as the calling party, the communication terminal 11A originates a voice call to the communication terminal 11B which serves as the called party via the GSM communication network 12 or the GPRS communication network 13, and the communication terminal 11B, as the called party, answers the voice call, such as accepts the call, rejects the call, etc. As a response, when the communication terminal 11B as the called party accepts the voice call, the voice communication can be implemented between the communication terminal 11A as the calling party and the communication terminal 11B as the called party.

Alternatively, the communication terminal 11B also can originate a voice call as the calling party to the communication terminal 11A as the called party.

In communication system 10 of the present invention, the chromatic image data provision platform 14 is used for storing chromatic image data, wherein the chromatic image data comprise personalized information which will be presented on communication terminal 11B and which represents a user of the communication terminal 11A, and comprises personalized information which will be presented on communication terminal 11A and which represents a user of the communication terminal 11B. For example, a user of mobile terminal 11A can preset on chromatic image data providing data 14, via the communication network through various access manners, chromatic image data which will be presented on communication terminal 11B during the origination, setup and implementation or after the completion of a voice call between the communication terminal 11A and the communication terminal 11B. For example, chromatic image data can be set (customized) by accessing the chromatic image data provision platform through the communication terminal, the World Wide Web (WWW), the Wireless Application Protocol (WAP), the Interactive Voice Response (IVR), etc. Likewise, a user of the mobile terminal 11B can preset on chromatic image data providing data 14, via the communication network through various access manners, chromatic image data which will be presented on the communication terminal 11A during the origination, setup and implementation or after the completion of a voice call between the communication terminal 11A and the communication terminal 11B. Types and content of the chromatic image data have been described above, so details thereof are omitted here.

In an embodiment of the present invention, the address information of mobile terminals 11A and 11B and the chromatic image data are stored in chromatic image data provision platform 14 in association with each other. Preferably, said address information is, for example, the unique identification code such as a telephone number assigned to the mobile terminal. A detailed description will be given to the configuration of chromatic image data provision platform 14 in the following.

According to an embodiment of the present invention, the communication network (second communication channel) for a voice call between the communication terminal 11A and communication terminal 11B can be a packet switched communication network, such as GPRS communication network 13, or a telephone switched communication network, such as GSM communication network 12. the packet switched communication network can be a wireless or wired network.

According to an embodiment of the present invention, the communication network (first communication channel) for chromatic image data acquisition between the communication terminal 11A and the chromatic image data provision platform 14 can be either identical to or different from the communication network (second communication channel) for a voice call between the communication terminal 11A and the communication terminal 11B.

Method for Providing Chromatic image Data to a Communication Terminal in a Communication System

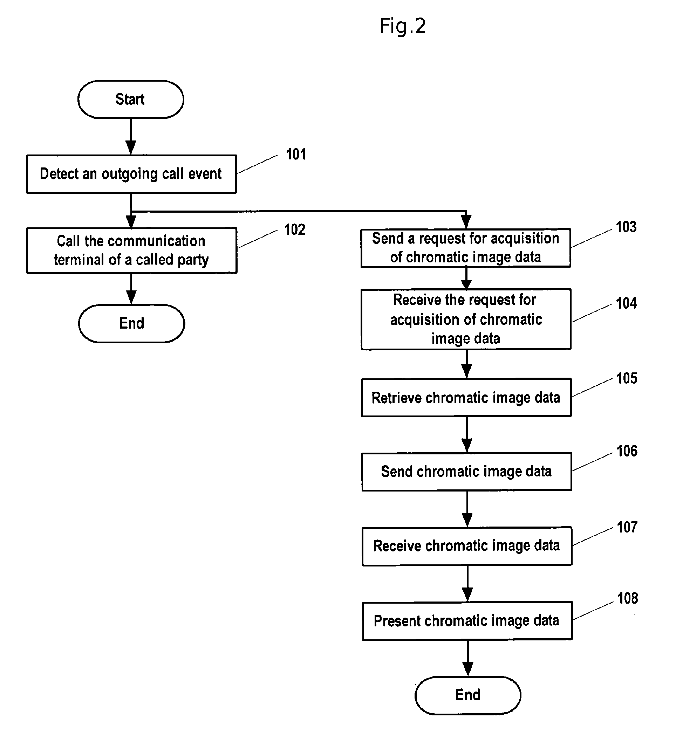

Fig. 2 shows a flowchart of a communication method according to one embodiment of the present invention.

As shown in Fig. 2, in the step 101, it is detected whether a voice outgoing-call event happens on the communication terminal 11A. Specifically, it is detected whether the calling party inputs into the communication terminal 11A of the calling party the unique identification code, such as a telephone number and the like, of the communication terminal 11B of the called party.

Optionally, if the unique identification code of the communication terminal 11B of the called party is pre-stored on the communication terminal 11A of the calling party, then it is detected whether the calling party has selected the unique identification code of the communication terminal 11B of the called party as stored on communication terminal 11A.

Afterwards, in the step 102, when the presence of an outgoing call event is detected in the step 101, the communication terminal 11A originates a call to the communication terminal 11B of the called party via the communication network based on the input or selected unique identification code of the communication terminal 11B of the called party.

Further, in the step 103, the communication terminal 11A of the calling party sends a request for acquisition of chromatic image data about a user of the communication terminal 11B to the chromatic image data provision platform 14 via the communication network. Preferably, the request for acquisition of chromatic image data at least comprises the address information of the communication terminal 11A of the calling party and the address information of the communication terminal 11B of the called party. More preferably, said address information is a unique identifier, such as a telephone number, assigned to the communication terminal. Preferably, the communication network is a GSM communication network or GPRS communication network.

Next, in the step 104, the chromatic image data provision platform 14 receives the request for acquisition of chromatic image data sent from the communication terminal 11A of the calling party, in order to acquire the address information of the communication terminal 11A of the calling party and the address information of the communication 11B of the called party, such as a unique identifier of the communication terminal.

Then, in the step 105, chromatic image data preset by the user of the communication terminal 11B of the called party, which will be provided to the communication terminal 11A of the calling party, is retrieved from the chromatic image data provision platform 14 based on the unique identification code of the communication terminal 11A of the calling party and the unique identification code of the communication terminal 11B of the called party.

In an embodiment of the present invention, chromatic image data preset by the user of the communication terminal 11B of the called party, which will be provided to the communication terminal 11A of the calling party, is retrieved from the chromatic image data provision platform 14 based on the address information (unique identification code) of the communication terminal 11A of the calling party, the address information (unique identification code) of the communication terminal 11B of the called party, and a time parameter.

In another embodiment of the present invention, chromatic image data preset by the user of the communication terminal 11B of the called party, which will be provided to the communication terminal 11A of the calling party, is retrieved from the chromatic image data provision platform 14 based on the unique identification code of the communication terminal 11A of the calling party, the unique identification code of the communication terminal 11B of the called party, a time parameter, and location information of the communication terminal 11A and communication terminal 11B.

Those skilled in the art will recognize that other parameter also can be used in the present invention for retrieving from the chromatic image data provision platform 14 chromatic image data preset by the user of the communication terminal 11B of the called party which will be provided to communication terminal 11A of the calling party, so long as the parameter has been stored in the chromatic image data provision platform 14 in association with chromatic image data.

Subsequently, in the step 106, the chromatic image data provision platform 14 sends the retrieved chromatic image data to the communication terminal 11A of the calling party via the communication network.

Subsequently, in the step 107, the communication terminal 11A of the calling party receives chromatic image data from chromatic the image data provision platform 14.

Next, in the step 108, the communication terminal 11A of the calling party presents the received chromatic image data based on the setting of the communication terminal 11A. The presence can be carried out simultaneously the operation of making a voice call in the step 102. For example, the received chromatic image data are presented on the communication terminal 11A before the call is put through. Also, the chromatic image data can be presented during the period when the call has been put through or after the call ends. According to an embodiment of the present invention, different chromatic image data can be presented before a call is put through, during the period when the call has been put through, and after the call ends.

Preferably, the received chromatic image data can be saved in the communication terminal 11A of the calling party so that the chromatic image data saved in the communication terminal 11A can be presented during the period of the voice call when the communication terminal 11A cannot set up a connection with the chromatic image data provision platform 14.

Preferably, the chromatic image data received from the chromatic image data provision platform 14 can be compared with the chromatic image data saved in communication terminal 11A to determine whether the chromatic image data stored in the communication terminal 11A needs to be updated. If the chromatic image data saved in the communication terminal 11A of the calling party is not consistent with the chromatic image data received from the chromatic image data provision platform, the chromatic image data saved in the communication terminal 11A can be updated with the received chromatic image data.

According to this embodiment of the present invention, during the period of a call between the communication terminal 11A which serves as the calling party and the communication terminal 11B which serves as the called party, the chromatic image data preset by the called user and stored in the chromatic image data provision platform, such as a picture, a section of animation or other multimedia and text information, are displayed in real time on a display screen of the communication terminal 11A which serves as the calling party before, when and after the communication terminal 11B which serves as the called party answers the call.

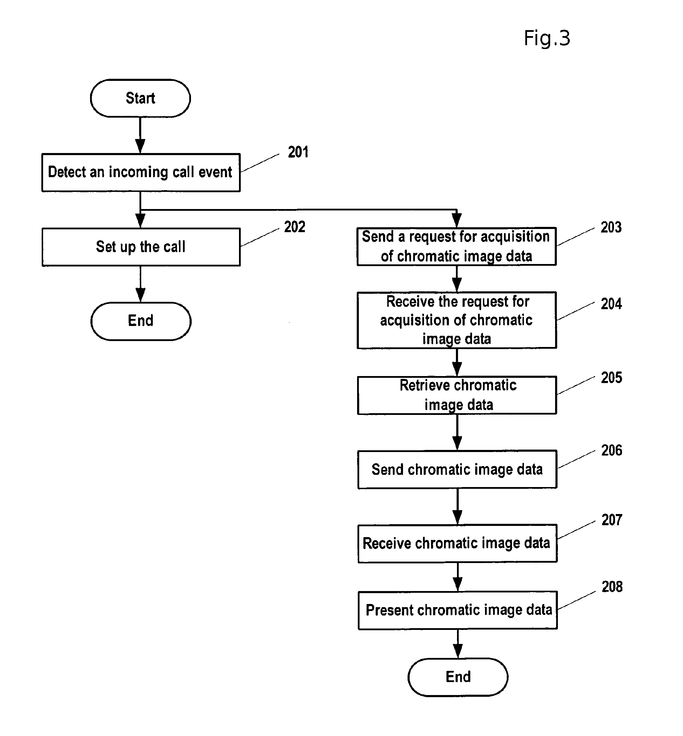

Fig. 3 shows a flowchart of a communication method according to another embodiment of the present invention.

In this embodiment, at the same time when the communication terminal 11B which serves as the called party receives a voice call sent via the communication network by the communication terminal 11A which serves as the calling party, it sends a request for acquisition of chromatic image data to the chromatic image data provision platform in order to acquire from the chromatic image data provision platform the chromatic image data preset by a user of the communication terminal 11A and to be displayed on the communication terminal 11B.

Firstly in the step 201, it is detected whether a voice incoming-call event happens on the communication terminal 11B. Specifically, it is detected whether the communication terminal 11B which serves as the called party receives a voice call setup request sent via the communication network from the communication terminal 11A.

Subsequently, if a voice call setup request is detected in the step 201, in the step 202 the communication terminal 11B which serves as the called party makes response to the call setup request in order to set up a call.

In the step 203, the communication terminal 11B of the called party sends a request for acquisition of chromatic image data about a user of the communication terminal 11A to the chromatic image data provision platform 14 via the communication network. Preferably, the request for acquisition of chromatic image data at least comprises the address information of the communication terminal 11A of the calling party and the address information of the communication terminal 11B of the called party. More preferably, the address information is a unique identifier, such as a telephone number, assigned to the communication terminal. Preferably, the communication network is a GSM communication network or GPRS communication network.

Next, in the step 204, the chromatic image data provision platform 14 receives the acquisition request sent from the communication terminal 11B.

Then, in the step 205, the chromatic image data preset by the user of the communication terminal 11A of the calling party, which will be provided to the communication terminal 11B of the called party, is retrieved from the chromatic image data provision platform 14 based on the address information of the communication terminal 11A of the calling party and the address information of the communication terminal 11B of the called party.

In an embodiment of the present invention, the chromatic image data preset by the user of the communication terminal 11A of the calling party, which will be provided to the communication terminal 11B of the called party, is retrieved from the chromatic image data provision platform 14 based on the address information (unique identification code) of the communication terminal 11A of the calling party, the address information (unique identification code) of the communication terminal 11B of the called party, and a time parameter.

According to this embodiment of the present invention, the chromatic image data preset by the user of the communication terminal 11A of the calling party, which will be provided to communication terminal 11B of the called party, is retrieved from the chromatic image data provision platform 14 based on the unique identification code of the communication terminal 11A of the calling party, the unique identification code of the communication terminal 11B of the called party, a time parameter, and locations of the communication terminal 11A and the communication terminal 11B.

Those skilled in the art will recognize that other parameters also can be used in the present invention for retrieving from chromatic image data provision platform 14 the chromatic image data preset by the user of the communication terminal 11A of the calling party, which will be provided to the communication terminal 11B of the called party, so long as the parameter has been stored in the chromatic image data provision platform 14 in association with chromatic image data.

Next, in the step 206, the chromatic image data provision platform 14 sends the retrieved chromatic image data to the communication terminal 11B of the called party via the communication network.

Subsequently, in the step 207, the communication terminal 11B of the called party receives the chromatic image data from chromatic image data provision platform 14.

Next, in the step 208, the communication terminal 11B of the called party presents the received chromatic image data based on the setting of the communication terminal 11B. The presence can be carried out simultaneously the operation of making a voice call in the step 202. For example, the received chromatic image data are presented on the communication terminal 11A before the call is put through. Optionally, the chromatic image data can also be presented during the period when the call has been put through or after the call ends.

Preferably, the received chromatic image data can be saved in the communication terminal 11B of the called party so that the chromatic image data saved in the communication terminal 11B can be presented during the period of the voice call when the communication terminal 11B cannot set up a connection with the chromatic image data provision platform 14.

Preferably, the chromatic image data received from the chromatic image data provision platform 14 can be compared with the chromatic image data saved in the communication terminal 11B to determine whether the chromatic image data stored in the communication terminal 11B needs to be updated. If the chromatic image data saved in the communication terminal 11B of the calling party are not consistent with the chromatic image data received from the chromatic image data provision platform, the chromatic image data saved in the communication terminal 11B can be updated with the received chromatic image data.

According to this embodiment of the present invention, during the period when the communication terminal 11A which serves as the calling party is calling the communication terminal 11B which serves as the called party, the chromatic image data preset by the calling user and stored in the chromatic image data provision platform, such as a picture, a section of animation or other multimedia and text information, are displayed in real time on a display screen of the communication terminal 11B which serves as the called party before, when and after the communication terminal 11B which serves as the called party answers the call.

According to a variant of the embodiments of the present invention, the chromatic image acquisition and presence actions are triggered only when a voice putting-through event, in place of a voice outgoing-call or incoming-call event, is detected. For example, the chromatic image acquisition and presence actions are performed only when a call is put through.

According to a variant of the embodiments of the present invention, the chromatic image acquisition and presence actions are performed only when the occurrence of a voice hangup is detected. For example, the chromatic image acquisition and presence actions are performed only when a telephone call hangs up.

According to a variant of the embodiments of the present invention, the communication terminal 11A can acquire from the chromatic image data provision platform 14 chromatic image data preset on the chromatic image data provision platform 14 by a user of the communication terminal 11B, which will be provided to communication terminal 11A where it does not set up a voice call with communication terminal 11B.

For example, by clicking on the unique identifier of the communication terminal 11B which is saved on the communication terminal 11A, a user of the communication terminal 11A can acquire from the chromatic image data provision platform 14 chromatic image data (such as the head portrait, personal resume and the like of a user of the communication terminal 11B) which is preset on chromatic image data provision platform 14 by the user of the communication terminal 11B and will be provided to the communication terminal 11A, before he/she is prepared to initiate a connection with the communication terminal 11B (prepare an outgoing call event).

Additionally, a user of the communication terminal 11A can actively acquire chromatic image from the chromatic image data providing data 14 by clicking on the unique identifier(or icon) of the communication terminal 11B which is saved on the communication terminal 11A, when the user of the communication terminal 11A only wants to query chromatic image data preset on the chromatic image data provision platform by a user of the communication terminal 11B, which will be provided to the communication terminal 11A (i.e. user active query event).

### Configuration of a Chromatic image Data Provision Platform

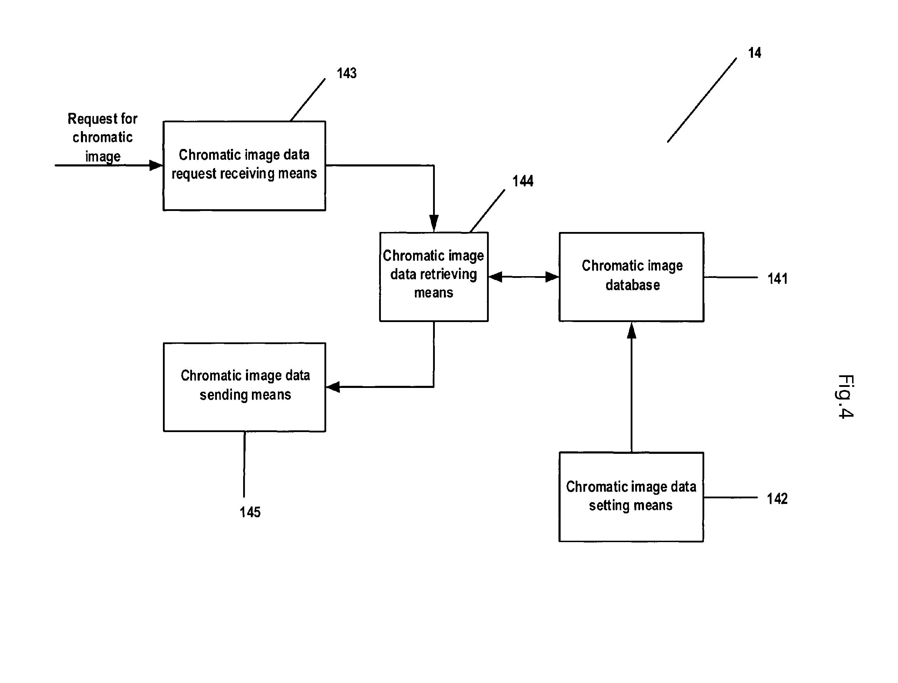

Fig. 4 shows a block diagram of the configuration of a chromatic image data provision platform according to one embodiment of the present invention.

As shown in Fig. 4, the chromatic image data provision platform 14 according to the present invention comprises a chromatic image database 141, chromatic image data request receiving means 143, chromatic image data retrieving means 144, and chromatic image data sending means 145. Preferably, the chromatic image data provision platform 14 according to the present invention can further comprise chromatic image data setting means 142.

In the chromatic image database 141 there is stored chromatic image data preset by the system and/or set by a registered user. As described previously, chromatic image data can comprise one of or the combination of text data, picture data, audio data, flash data, video data, link address data, and multimedia data.

Preferably, the chromatic image data and the unique identification code assigned to a communication terminal are stored in chromatic image database 141 in association with each other. For example, if a registered user hopes to display particular chromatic image data on the communication terminal of another user when he/she is setting up a voice call with the another user, the particular chromatic image data, the unique identification code assigned to the communication terminal of the registered user and the unique identification code assigned to the communication terminal of the another user can be stored in the chromatic image database in association with one another.

Chromatic image data setting means 142 is used for setting chromatic image data in the chromatic image database. In the present invention, if a user of the communication terminal 11A is a registered user of chromatic image data providing services, he/she can set, in the chromatic image database through chromatic image data setting means 142 via the communication network, chromatic image data that are to be displayed on the communication terminal 11B when the communication terminal 11B calls the communication terminal 11A. Additionally, if a user of the communication terminal 11B is a registered user of chromatic image data providing services, he/she can set, in the chromatic image database through chromatic image data setting means 142 via the communication network, chromatic image data that are to be displayed on the communication terminal 11A when the communication terminal 11A calls the communication terminal 11B.

According to the present invention, a registered user can access chromatic image data provision platform 14 using an application on a communication terminal, so as to set chromatic image data via chromatic image data setting means 142. The registered user also can access the chromatic image data provision platform 14 through the World Wide Web (WWW), so as to set chromatic image data via chromatic image data setting means 142. The registered user also can access the chromatic image data provision platform 14 in the manner of a short message using the Wireless Application Protocol (WAP), so as to set chromatic image data via chromatic image data setting means 142. Moreover, the registered user also can access the chromatic image data provision platform 14 in the manner of Interactive Voice Response (IVR), so as to set chromatic image data via chromatic image data setting means 142.

According to an embodiment of the present invention, respective chromatic image data to be displayed on the communication terminal of a calling party can be set for various call states of the communication terminal of a called party, such as idle, power-off, out-of-service, busy, etc. In other words, a registered user which serves as the called party can store different call states of the communication terminal of the called party and chromatic image data corresponding to respective call states in the chromatic image database in association with one another by mean of the chromatic image data setting means 142. When the communication terminal of calling party sends a request for acquisition of chromatic image data to the chromatic image data provision platform, the chromatic image data provision platform 14 can acquire a call state of the called party and retrieve in the chromatic image database chromatic image data corresponding to the call state so as to provide the chromatic image data to the communication terminal of the calling party. The communication terminal of the calling party can display the chromatic image data corresponding to the call state and provided by the chromatic image data provision platform.

According to an embodiment of the present invention, a registered user can set, through chromatic image data setting means 142, personal state information which he/she currently wants to display to the other party as chromatic image data. The state information can include, without limitation, busy, in a meeting, out, out for meal, break, etc.

Preferably, a registered user can set a temporary on or off function for the provision of chromatic image data through chromatic image data setting means 142.

According to an embodiment of the present invention, the chromatic image data provision platform provides default chromatic image to a registered user. Specifically, if a registered user does not make special setting after applying for chromatic image data providing services, chromatic image data received by a communication terminal calling the registered user is default chromatic image data which the chromatic image data provision platform assigns to the registered user. Preferably, the registered user can change default chromatic image data.

According to an embodiment of the present invention, the registered user can customize chromatic image according to time through chromatic image data setting means 142. Specifically, chromatic image data can be set to provide different chromatic image data for different periods of time. For example, different chromatic image data are provided in different periods of time each day. For example, different chromatic image data are provided in periods of time from 8:00am to 12:00am and from 1:00pm to 6:00pm each day respectively. Different chromatic image data are provided in different days each week. For example, different chromatic image data are provided from Monday to Friday and from Saturday to Sunday respectively. Different chromatic image data are provided in one day or days each month. For example, different chromatic image data are provided on the 5^{th} or from the 5^{th} to 10^{th} each month. Moreover, different chromatic image data are provided in one day or days each year. For example, different chromatic image data are provided on October 1^{st} and from May 1^{st} to May 7^{th} each year. Periods of time further comprise a pre-specified concrete date and period of time.

According to an embodiment of the present invention, the registered user can customize different chromatic image according to different numbers of the other party through chromatic image data setting means 142. Specifically, where the other party has multiple numbers, each number and corresponding chromatic image data can be stored in the chromatic image database in association with each other. In this manner, if a chromatic image acquisition request is received from one of numbers, then the chromatic image data provision platform will send to the other party chromatic image data corresponding to this number.

In an embodiment of the present invention, the registered user can group numbers through chromatic image date setting means 142, name the groups, and customize different chromatic image for different number group. Specifically, group names, member numbers and chromatic image data can be stored in the chromatic image database in association with one another. For example, numbers can be grouped into "colleagues," "friends," "family" and others. In this manner, if a chromatic image acquisition request is received from a group member, chromatic image data corresponding to this group will be sent to the group member.

In an embodiment of the present invention, the registered user can customize chromatic image data according to a location of the other party through chromatic image data setting means 142. Different chromatic image data can be set for different locations (country, province, city) of the other party. Specifically, the identification code of the other party, the identification code of the registered user, locations and corresponding chromatic image data are stored in the chromatic image database in association with one another. In this manner, if a request for acquisition of chromatic image data is received from a party, which request comprises the identification code of the party, the identification code of the registered user and location, then chromatic image data corresponding to the location can be sent to the party. For example, chromatic image data obtained after the party sends a chromatic image data request in Beijing can be different from chromatic image data obtained after the party sends a chromatic image data request in Shanghai.

In an embodiment of the present invention, the registered user can customize, through chromatic image data setting means 142, different chromatic image according to a type of a communication terminal on which chromatic image data will be presented. For example, different chromatic image data are provided for the respective presence on a cellular telephone, fixed telephone and PDA.

Those skilled in the art will recognize that the registered user can combine conditions such as call state, time, location, number, number group, and type of a communication terminal described above, in order to customize different chromatic image. Additionally, the presence rule of chromatic image data can set respective priorities for conditions such as call state, time, location, number, number group, and type of a communication terminal described above.

In an embodiment of the present invention, the registered user can edit and modify chromatic image data and establish and alter personalized information through chromatic image data setting means 142. The modification and establishment of chromatic image data, for example, comprises: the upload and modification of personal digital photos and the establishment of new chromatic image; the upload and modification of personal pictures and the establishment of new chromatic image; as well as the upload and modification of animation and other stream media and the establishment of new chromatic image.

Still referring to Fig. 4, chromatic image data request receiving means 143 receives a request for acquisition of chromatic image data from the communication terminal.

Chromatic image data retrieving means 144 retrieves chromatic image data to be presented on the communication terminal from the chromatic image database 141 based on parameters contained in the request for acquisition of chromatic image data. Preferably, the parameters comprise respective unique identification code assigned to the communication terminal of the calling party and the communication terminal of the called party.

Chromatic image data sending means 145 receives the retrieved chromatic image data and sends the retrieved chromatic image data to the communication terminal via the communication network.

The chromatic image data provision platform according to the present invention is provided with the function of service promotion and prompt. After a user who has applied for chromatic image data providing services has a phone call with a user who has not applied for chromatic image data providing services or a user on whose terminal no client software is installed, the function of service promotion and prompt in the manner of a short message, multimedia message, IVR and so on are provided.

According to a preferable embodiment of the present invention, the chromatic image data provision platform 14 can judge and compare the software version of a communication terminal during the procedure of a connection between the communication terminal and the chromatic image data provision platform 14. If there is a later version than the current software version of a communication terminal, the user is prompted to update the version, so that software of the communication terminal can be updated.

The chromatic image data provision platform according to the present invention can provide in real time statistics data, such as the number of users of chromatic image data services, the number of users who apply for chromatic image services in a given period, the income of chromatic image data services in a given period, information charges incurred when a user downloads chromatic image data of the third-party service provider.

The chromatic image data provision platform further provides an information charge list. The list comprises: time of purchasing and downloading chromatic image data, name of a content provider who provides services, name of chromatic image, and other content.

Every chromatic image data can be provided with a certain period of validity or used permanently. When chromatic image data in services customized by the registered user expires the period of validity, the chromatic image can be changed to default chromatic image of the system and services are still provided. Or the chromatic image data are still provided for the user, and the use this time is recorded for charge. An explicit prompt is provided to the user in the manner of a short message for charge once again.

### Configuration of a Communication Terminal

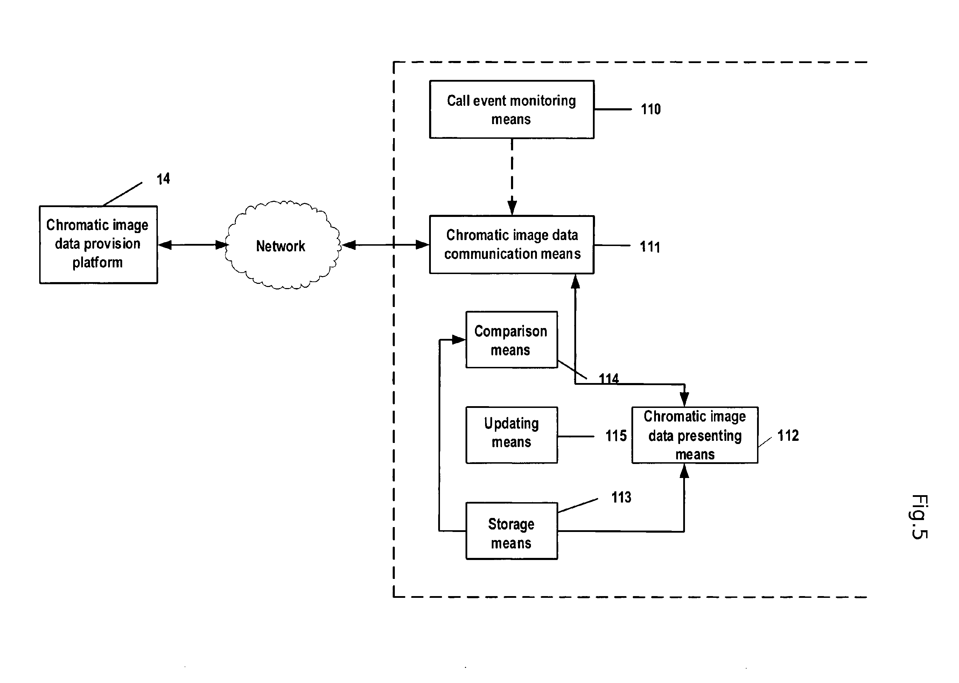

Fig 5 shows a schematic view of a communication terminal according to one embodiment of the present invention.

As shown in Fig. 5, a communication terminal according to an embodiment of the present invention comprises: call event monitoring means 110, chromatic image data communication means 111, and chromatic image data presenting means 112. Preferably, the communication terminal further comprises chromatic image data storage means 113.

Call event monitoring means 110 monitors the occurrence of a call event in real time, including an incoming voice call event, an outgoing voice call event, a voice putting-through event, a voice hangup event, a ready for outgoing call event, a user query event, etc. These call events have been described above. Call event monitoring means 110 is also responsible for providing some parameters concurrent with an event occurrence, including the unique identification code of a communication terminal of the calling party, such as a telephone number.

Chromatic image data communication means 111 is packaged with a protocol for communication with chromatic image data provision platform 14. When a call event occurs, chromatic image data communication means 111 sets up a connection with the chromatic image data provision platform 14 and communicates with chromatic image data provision platform 14 via the network to acquire chromatic image data. Specifically, when a call event occurs, chromatic image data communication means 111 sends to chromatic image data provision platform 14 a request for chromatic image data associated with the call event. Preferably, the request at least comprises the unique identification code of the communication terminals of the two parties of the call related to the call event. Further, chromatic image data communication means 111 receives from the chromatic image data provision platform 14 chromatic image data as a response to said request and sends the received chromatic image data to the chromatic image data presenting means 112.

Chromatic image data presenting means 112 is used for presenting chromatic image data, including text data, picture data, audio data, vide data and other multimedia data.

Preferably, the device for providing chromatic image data in a communication terminal further comprises chromatic image data storage means 113. Chromatic image data storage means 113 receives and stores chromatic image data from chromatic image data communication means 111. Chromatic image data storage means 113 will provide the function of temporary storage of chromatic image data to avoid that the same chromatic image data can be downloaded repeatedly.

Preferably, the communication terminal further comprises: comparison means 114 for comparing chromatic image data acquired from chromatic image data provision platform 14 by chromatic image data communication means 111 with corresponding chromatic image data stored in chromatic image data storage means 113; and updating means 115 for, when chromatic image data acquired from chromatic image data provision platform 14 are not consistent with corresponding chromatic image data stored in chromatic image data storage means 113, updating said chromatic image data stored in chromatic image data storage means 113 with said chromatic image data acquired from chromatic image data provision platform 14 so as to be presented in future.

In an embodiment of the present invention, if chromatic image data are not of the type of stream media, then chromatic image data presenting means 112 will start to play content after all chromatic image data are received, and terminates the network connection at the same time. If chromatic image data are of the type of stream media, then chromatic image data presenting means 112 will start to present said chromatic image data in real time and keep the network connection to continue downloading data.

In an embodiment of the present invention, if chromatic image data are of the type of business card, then said chromatic image data will be presented in the form of business cards. If chromatic image data are of the URL type, then said chromatic image data will be presented in the form of web pages. If chromatic image data are of the multimedia type, then said chromatic image data will be presented in the form of a multimedia player. If chromatic image data are of the Avatar type, then said chromatic image data will be presented in the form of the other party's avatar.

### Operations in a Communication Terminal

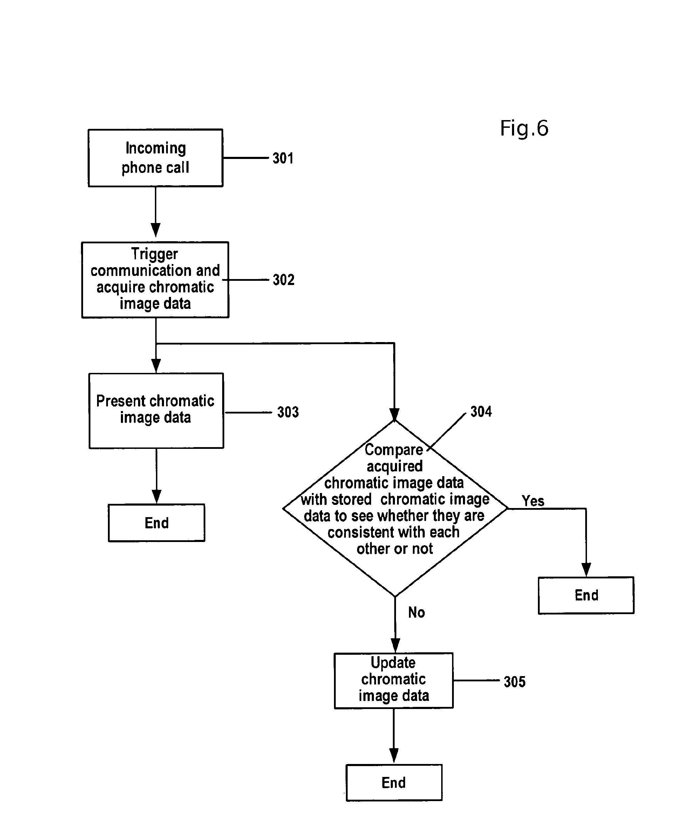

Fig. 6 shows a flowchart of operations performed by a communication terminal according to one embodiment of the present invention. The example of Fig. 6 illustrates the situation of an incoming voice call event severing as a call event.

As shown in Fig. 6, in the step 301, call event monitoring means 110 monitors an incoming voice call in step 301.

In the step 302, when an incoming voice call is monitored, the incoming voice call event will trigger chromatic image data communication means to communicate with chromatic image data provision platform 14 using the chromatic image data interactive protocol, so as to acquire chromatic image data related to the incoming voice call event from the chromatic image data provision platform 14. Specifically, when an incoming voice call event occurs, chromatic image data communication means 111 sends to chromatic image data provision platform 14 a request for acquisition of chromatic image data associated with the call event. Preferably, the request at least comprises telephone numbers of the communication terminals of the two parties of the call related to the incoming voice call event. Further, chromatic image data communication means 111 receives from the chromatic image data provision platform 14 chromatic image data as a response to said request and sends the received chromatic image data to chromatic image data presenting means 112.

In the step 303, concurrent with the incoming voice call, chromatic image data presenting means 112 presents said chromatic image data, and then the processing ends.

Preferably, in the step 304, the chromatic image data acquired from chromatic image data provision platform 14 are compared with the corresponding chromatic image data stored in chromatic image data storage means 113. If the chromatic image data acquired from chromatic image data provision platform 14 are consistent with the corresponding chromatic image data stored in chromatic image data storage means 113, then the processing ends. Otherwise, in the step 305, said chromatic image data stored in the chromatic image data storage means are updated with the chromatic image data acquired from the chromatic image data provision platform 1, so as to be presented in future. Then, the processing ends.

The processing in the case of other call events is similar to the processing described previously, so details thereof are omitted here.

It is pointed out in particular that when a voice hangup event occurs, call event monitoring means 110 will notify chromatic image data presenting means 112, and at this point chromatic image data presenting means 112 will stop presenting chromatic image data. However, this function is based on actual needs, and if there is a need to continue presenting chromatic image data after a voice hangup, then the presence does not stop. In the case of multi-path voice putting through, only the presence of chromatic image data corresponding to the hanging up voice call stops, and the presence of chromatic image data corresponding to other voice calls continues.

In the case of a video phone putting through, the presence of chromatic image data can stop in order not to affect the use of normal functions of the video phone. The processing procedure is quite similar to that of a voice hangup except that the event is triggered when the phone is put through.

The present invention can be implemented in software, firmware, hardware or a combination thereof. Those skilled in the art will recognize that the present invention may also be embodied in a computer program product arranged on a signal carrier medium to be used for any proper data processing system. Such signal carrier medium can be a transmission medium or a recordable medium used for machine readable information, including a magnetic medium, optical medium or other proper medium. Examples of a recordable medium include a floppy or magnetic disc in a hard disc drive, an optical disc for an optical drive, a magnetic tape, and other medium those skilled in the art can conceive. Examples of a transmission medium include a telephone network for voice communication and a digital data communication network, such as the Ethernet ^{™} and a network in communication with the Internet Protocol and the World Wide Web. Those skilled in the art will further recognize that any communication terminal with proper programming means can perform the steps of the method of the present invention as embodied in a program product for example. Furthermore, those skilled in the art will recognize although some illustrative embodiments described in this specification are oriented to software installed and executed on a communication terminal, optional embodiments regarded as firmware or hardware also fall into the scope of the present invention.

It is to be understood from the foregoing description that modifications and alterations can be made to respective embodiments of the present invention without departing from the true spirit of the present invention. The description in this specification is intended to be illustrative and not limiting. The scope of the present invention is limited by the claims only.

## Claims

1. A communication method for providing communication data to a first communication terminal in a communication system, wherein said communication data are chromatic image data representing personalized information of a user of a second communication terminal in said communication system, said chromatic image data being pre-stored on a chromatic image data provision platform, the method comprising the steps of:
sending, by said first communication terminal, a request for acquisition of said chromatic image data to said chromatic image data provision platform; and
receiving, by said first communication terminal, from said chromatic image data provision platform said chromatic image data as a response to said request

2. The method according to claim 1, further comprising the step of presenting said chromatic image data on said first communication terminal.

3. The method according to claim 1, further comprising the step of: prior to said sending step, detecting whether a call event occurs on said first communication terminal,
wherein said sending step is performed when the occurrence of a call event is detected.

4. The method according to claim 3, wherein said call event is one of an incoming call event, an outgoing call event, a putting through event, a hangup event, a ready for an outgoing call event, and a user query event.

5. The method according to claim 1, wherein said request at least comprises the address information of said first communication terminal and the address information of said second communication terminal.

6. The method according to claim 5, wherein said address information is unique identification code assigned to said first or second communication terminal.

7. The method according to claim 1, further comprising the step of: after said receiving step, saving the received chromatic image data in said first communication terminal.

8. The method according to claim 7, further comprising the step of presenting the previously saved polychrome material on said first communication terminal when said chromatic image data cannot be received from said chromatic image data provision platform.

9. The method according to claim 7, further comprising the step of updating previously saved chromatic image data using the received chromatic image data when said received chromatic image data are not consistent with the chromatic image data previously saved in said first communication terminal.

10. The method according to claim 1, wherein said sending step and said receiving step are performed via a first communication channel, said first communication channel being a packet switched channel.

11. The method according to claim 10, wherein said packet switched channel is one of a wired and a wireless packet channel.

12. The method according to claim 1, wherein said sending step and said receiving step are performed via a first communication channel which is a circuit switched channel.

13. The method according to claim 1, wherein said first communication terminal is an originating device and said second communication terminal is a terminating device, wherein said sending step is performed when said first communication terminal originates a call setup request to said second communication terminal via said second communication channel.

14. The method according to claim 13, wherein said second channel is one of a circuit switched channel and a packet switched channel.

15. The method according to claim 13, wherein said second channel is the same channel as said first channel.

16. The method according to claim 13, wherein said second channel is a different channel from said first channel.

17. The method according to claim 1, wherein said first communication terminal is a terminating device and said second communication terminal is an originating device, wherein said sending step is performed when said first communication terminal receives a call setup request from said second communication terminal via said second communication channel.

18. The method according to claim 17, wherein said second channel is one of a circuit switched channel and a packet switched channel.

19. The method according to claim 17, wherein said second channel is the same channel as said first channel.

20. The method according to claim 17, wherein said second channel is a different channel from said first channel.

21. The method according to claim 1, wherein said chromatic image data are different depending on different call states.

22. The method according to claim 1, wherein said chromatic image data are different depending on different periods of time.

23. The method according to claim 1, wherein said chromatic image data are different depending on different communication terminals.

24. The method according to claim 1, wherein said chromatic image data comprise one of or the combination of text data, picture data, audio data, flash data, video data, link address link, and multimedia data.

25. The method according to claim 1, wherein said personalized information comprises identity information of a user of said second communication terminal.

26. The method according to claim 25, wherein said identity information comprises one or more of name, gender, telephone number, home address, company name, title, zip code, MSN, email address, and personal signature.

27. A communication method for providing communication data to a first communication terminal in a communication system, wherein said communication data are chromatic image data representing personalized information of a user of a second communication terminal in said communication system, said chromatic image data being pre-stored in a chromatic image data provision platform, the method comprising the steps of:
receiving a request for acquisition of said chromatic image data from said first communication terminal;
retrieving said chromatic image data in said chromatic image data provision platform based on a parameter in said request; and
sending the retrieved chromatic image data to said first communication terminal.

28. The method according to claim 27, wherein said parameter at least comprises the address information of said first communication terminal and the address information of said second communication terminal.

29. The method according to claim 28, wherein said address information is unique identification code assigned to the communication terminal.

30. A communication system for providing communication data to a first communication terminal in the communication system, wherein said communication data are chromatic image data representing personalized information of a user of a second communication terminal in said communication system, the system comprising:
the first communication terminal;
the second communication terminal; and
a chromatic image data provision platform in which said chromatic image data are stored;
wherein said first communication terminal sends a request for acquisition of said chromatic image data to said polychrome server and receives from said chromatic image data provision platform said chromatic image data as a response to said request.
